# EUROPÄISCHE PATENTANMELDUNG

(11) **EP 1 417 893 A1**
(43) Veröffentlichungstag der Anmeldung: **12.05.2004**
(21) Anmeldenummer: 02024939.7
(22) Anmeldetag: 06.11.2002
(51) Int. Cl.: A23K 1/18, A23N 17/00

(54) **Thermisches Verfahren zum Behandeln von Futtermitteln von Wiederkäuern**

(71) Anmelder: Amandus Kahl GmbH & Co., 21465 Reinbek (DE)
(72) Erfinder: Lucht, Hans Walter, 21465 Reinbek (DE); Graf von Reichenbach, Heinrich, Dr., 21465 Reinbek (DE)
(74) Vertreter: Glawe, Delfs, Moll & Partner

(57) **Zusammenfassung**

Das Verfahren zum Behandeln von Einzelfuttermitteln, Gesamtfuttermischungen, Futter-Prämixen und Futtermittelkomponenten für Wiederkäuer, insbesondere Milchkühe und Mastrinder, bei dem das Rohmaterial bei erhöhter Temperatur angefeuchtet und anschließend in einem Expander behandelt wird, zeichnet sich dadurch aus, daß das Material nach dem Austreten aus dem Expander für ca. 3 bis 20 Minuten auf einer Temperatur von mehr als ungefähr 80°C gehalten wird.

## Beschreibung

Die Erfindung betrifft ein Verfahren zum Behandeln von Futtermitteln, Gesamtfuttermischungen, Futter-Prämixen und Futtermittelkomponenten für Wiederkäuer, insbesondere Milchkühe und Mastrinder, bei dem das Rohmaterial bei erhöhter Temperatur angefeuchtet und anschließend in einem Expander behandelt wird.

Die Milchkuh stellt besondere Anforderungen an ihre Proteinversorgung. Um eine hohe Milchleistung zu erzielen, benötigt sie Eiweißfutterkomponenten, die eine hohe Stabilität gegenüber Abbau und Umwandlung im Pansen besitzen. Ein möglichst hoher Anteil pansenstabilen Proteins soll unabgebaut durch den Pansen zum Darm der Tiere gelangen, in welchem es dann vollständig abgebaut wird und der Milchsynthese zur Verfügung steht. Aufgrund dieser Eigenschaft werden pansenstabile Proteine auch "Bypass-Proteine" genannt - sie umgehen den Abbauschritt im Pansen und vollziehen diesen erst im Darmtrakt.

Die verschiedenen Futterkomponenten weisen unterschiedlich rasch im Pansen abbaubare Proteinanteile auf. Auch wird die Pansenstabilität von Proteinen durch manche verfahrenstechnische Prozesse gesteigert; z.B. bei Rapssaat oder Sojabohnen durch die Wärmeeinwirkung bei der Ölextraktion. Daher sind Extraktionsschrote sehr geschätzte Eiweißfutterkomponenten für Milchviehfutter.

Die Milchleistung der Hochleistungskühe jedoch macht mittlerweile besonders hohe Bypassprotein-Konzentrationen im Futter notwendig. Daher suchte die Futtermittelindustrie nach Möglichkeiten, die Pansenstabilität der Proteinfraktion in Futtermitteln künstlich zu erhöhen.

Mittlerweile ist ein Verfahren gebräuchlich, bei welchem Eiweißfuttermittel - unter Zusatz von Katalysatoren - hydrothermisch behandelt, d.h. längere Zeit feuchtheiß bei Siedetemperatur geröstet werden. Hauptkritikpunkte dieser Verfahren sind eben diese Katalysatoren - zum einen das als krebserregend bekannte Formaldehyd, oder alternativ das Lignosulfonat, ein Abfallstoff aus der Papierherstellung.

Bei einem bekannten Verfahren der eingangs genannten Art (EP 1 033 078 A1) wird derselbe Effekt gänzlich ohne Zuhilfenahme von Katalysatoren erzielt. Ein weiterer Vorteil dieses bekannten Verfahrens ist, daß das Produkt die sog. Expandatstruktur aufweist. Expandat ist aufgrund seiner Form, Größe und Oberfläche entmischungsstabil, so daß die Tiere nicht selektiv sich Nahrungsmittelkomponenten aussuchen können, und für die TMR-Fütterung besonders geeignet. TMR-Futter (Totale Misch-Ration) ist vom Tierhalter selbst gemischtes Futter, bestehend aus hofeigenen Komponenten wie z. B. Silage und eventuell Getreide und zugekauften Komponenten wie z. B. Vormischungen und Eiweißfutterkonzentraten Die Aufgabe der Erfindung besteht in der Schaffung eines Verfahrens, mit dem der Anteil des Bypass-Proteins weiter erhöht werden kann.

Die erfindungsgemäße Lösung besteht darin, daß das Material nach dem Austreten aus dem Expander für ca. 3 bis 20 Minuten auf einer Temperatur von mehr als ungefähr 80°C gehalten wird.

Das Material wird also nicht, wie dies sonst üblich ist, unmittelbar nach dem Austreten aus dem Expander gekühlt, etwa auf einem Bandkühler, sondern wird noch für eine gewisse Zeit auf einer erhöhten Temperatur gehalten. Dadurch erhöht sich überraschenderweise der Anteil der Bypass-Proteine.

Vorteilhafterweise wird das Material ungefähr 10 Minuten auf der Temperatur von mehr als ungefähr 80°C gehalten. Dies kann einerseits dadurch geschehen, daß das Material nach dem Austreten aus dem Expander in einer wärmeisolierten Umschließung gehalten wird, z.B. in wärmeisolierten Behältern oder wärmeisolierten Säcken. Das Material wird zwar im Expander durch die Reibung und ggf. Dampfzugabe auf mehr als 100°C erwärmt. Beim Austreten aus dem Expander verdampft aber schlagartig Wasser, so daß die Temperatur auf etwas unter 100°C absinkt. Verbringt man das Material nun in eine wärmeisolierte Umschließung, so wird die Temperatur während einiger Zeit, zumindest während 10 Minuten, auf über 80°C bleiben.

Bei einer anderen vorteilhaften Ausführungsform ist vorgesehen, daß das Material nach dem Austreten aus dem Expander in einem hydrothermischen Reaktor auf eine Temperatur von ca. 100°C erwärmt und auf dieser Temperatur gehalten wird. In einem solchen hydrothermischen Reaktor kann dadurch eine etwas höhere Temperatur erzielt werden, als wenn das Material nach dem Austreten aus dem Expander einfach in eine wärmeisolierte Umschließung verbracht wird.

Hier und in den Ansprüchen wird ein hydrothermischer Reaktor besonders hervorgehoben. Statt dessen können aber auch andere Geräte verwendet werden, die ähnliche Wirkungen zeigen, wie z.B. ein dampfbeheiztes Bandgerät oder ein Gerät mit einer großen Dampfmisch- und Verweilschnecke. Wichtig ist beim erfindungsgemäßen Verfahren das Warmhalten bzw. Erwärmen des Expandats für eine gewisse Zeitdauer nach dem Expandieren.

Es ist zwar aus dem Stand der Technik (EP 1 033 078 A1) bekannt, vor dem Expander einen hydrothermischen Reaktor vorzusehen. Dadurch, daß erfindungsgemäß dieser hydrothermische Reaktor aber nach dem Expander angeordnet wird, ergibt sich eine weitere überraschende, bei gewissen Futtermitteln sogar sehr beträchtliche Erhöhung des Anteils der Bypass-Proteine.

Die Erwärmung in hydrothermischen Reaktor erfolgt zweckmäßigerweise durch Dampfzugabe und durch Beheizen des Reaktors.

Zweckmäßigerweise wird das Rohmaterial vor dem Eintreten in den Expander auf einen Feuchtegehalt von ungefähr 15% bis 25%, insbesondere ungefähr 18% bis ungefähr 19% eingestellt. Im Expander wird das Material vorteilhafterweise auf eine Temperatur von bis zu ca. 130°C erwärmt.

In dem Expander wird das Material durch ein Förderelement, insbesondere eine Förderschnecke, gegen ein mit einer engen Öffnungen versehenes Austrittsende gedrückt. Dadurch wird nicht nur eine Druckerhöhung, sondern durch die Reibung auch eine Temperaturerhöhung bewirkt, die durch Hinzufügen von Dampf noch erhöht werden kann. Im Expander kann bei Temperaturen bis ungefähr 170°C, insbesondere bis 150°C gearbeitet werden. Für das erfindungsgemäße Verfahren hat sich eine Temperatur von ungefähr 130°C als besonders vorteilhaft erwiesen.

Zweckmäßigerweise, aber nicht notwendigerweise, wird nach der hydrothermischen Behandlung eine Pelletierung durchgeführt. Diese bringt den Vorteil mit sich, die Schüttdichte zu erhöhen und damit die Transportkosten zu senken, insbesondere wenn vorzerkleinertes Extraktionsschrot verarbeitet wird. Wesentlich ist es, daß in vielen Fällen eine Zerkleinerung der Futtermittel zweckmäßig ist, insbesondere bei der Verarbeitung von Gesamtfuttermischungen oder Futtermittelkomponenten, welche zusätzlich höhere Stärkeanteile enthalten. Je nach Rohmaterial wird man unzerkleinerte Körner verwenden, die natürlich den Vorteil mit sich bringen, daß die Verdauungssäfte im Pansen die Stärke nicht so leicht aufschließen können. In anderen Fällen haben diese unzerkleinerten Körner aber den Nachteil, daß im Dünndarm die Stärke nicht vollständig in Glukose umgewandelt werden kann. Es kann daher zweckmäßig sein, wenn die Körner angebrochen oder gequetscht werden. Die Zerkleinerung der Körner kann dabei in einer Hammermühle stattfinden. Als besonders zweckmäßig hat sich für diese Aufgabe ein Walzenstuhl erwiesen. Dabei muß aber generell berücksichtigt werden, daß die Stärkekörner möglichst wenig geschädigt werden.

Die erfindungsgemäße Wirkung beruht auf dem kombinierten Einfluß von Temperatur, Dampfüberdruck und hohem mechanischen Druck sowie intensiven Scherkräften im Expander und der anschließenden hydrothermischen Behandlung. Aufgrund seiner geringen Restfeuchte läßt sich das fertige Futtermittel bereits durch Kühlung mit Umgebungsluft trocknen. Zusätzliche Heizenergie ist hierfür in den meisten Fällen nicht erforderlich.

Die Erfindung wird im folgenden anhand einer vorteilhaften Ausführungsform unter Bezugnahme auf die beigefügten Zeichnungen beschrieben. Es zeigen:
- Fig. 1: schematisch eine Anlage zur Durchführung des Verfahrens des Standes der Technik; und
- Fig. 2: schematisch eine Anlage, die für das erfindungsgemäße Verfahren verwendet werden kann.

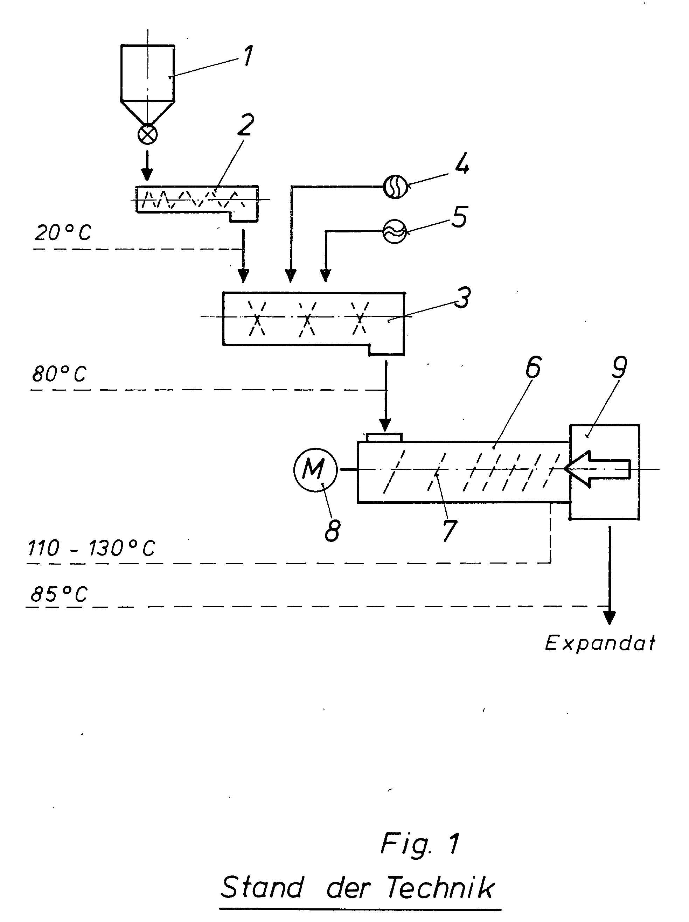

Bei der Anlage des Standes der Technik der Fig. 1 wird das Einzelfuttermittel oder die Futtermittelmischung aus einem Vorratsbehälter 1 über einen Förderer 2 in einen Kurzzeit-Konditionierer 3 gefördert, in dem das Material mittels Dampf 4 oder zusätzlich noch mittels Flüssigkeit 5 befeuchtet und erwärmt wird. Die Temperatur von typischerweise 20°C steigt dabei auf 80°C. Anschließend wird das Material dann in einen Expander 6 verbracht, der in einem rohrförmigen Gehäuse eine Förderschnecke 7 aufweist, die durch einen Motor 8 angetrieben wird. Das Material wird dabei gegen eine Auslaßöffnung gefördert, die durch ein Gegendrukkelement 9 wenigstens teilweise verschlossen ist. Durch die intensive mechanische Bearbeitung und Reibung und ggf. durch weitere Dampfzugabe steigt dabei die Temperatur des Materials auf typischerweise 110°C bis 130°C an. Beim Verlassen des Expanders entspannt sich der Druck spontan auf Atmosphärendruck, so daß überhitztes Wasser schlagartig verdampft, wodurch das Expandat den Expander 6 mit einer Temperatur von typischerweise 85°C verläßt.

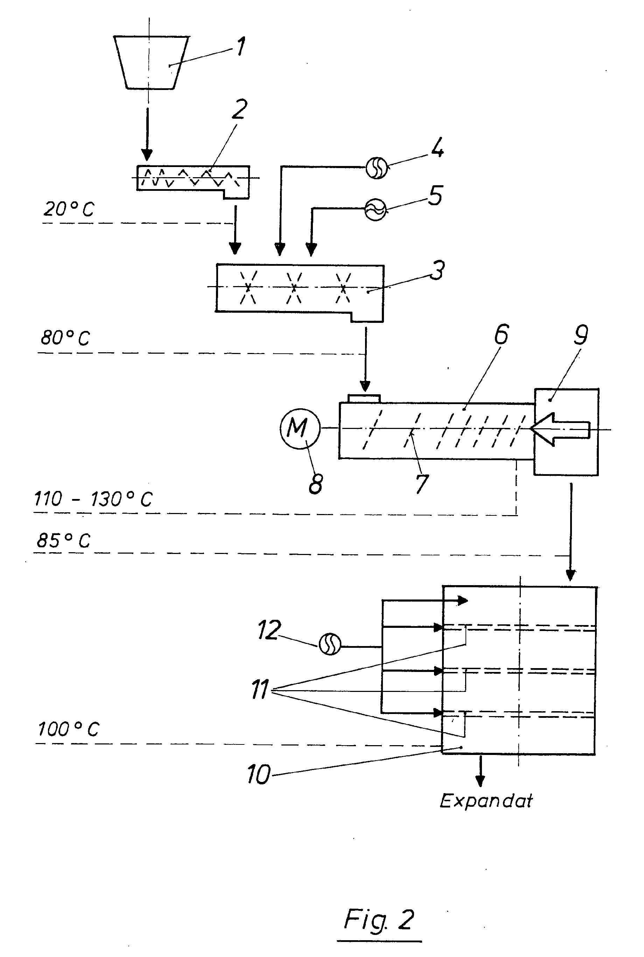

Die erfindungsgemäße Anordnung der Fig. 2 unterscheidet sich von derjenigen der Fig. 1, indem sich an den Expander 6 ein hydrothermischer Reaktor 10 anschließt, in dem das Material auf mehreren Böden 11 für eine gewisse Zeit, vorzugsweise ca. 3 bis 20 Minuten, insbesondere 10 Minuten zwischengelagert wird. In die Böden 11 und in den Raum des hydrothermischen Reaktors 10 wird bei 12 Dampf eingeblasen, um das Material auf eine Temperatur von ungefähr 100°C zu erwärmen und auf dieser Temperatur zu halten. Zusätzlich sollte der hydrothermische Reaktor 10 auch beheizt werden.

Statt des hydrothermischen Reaktors 10 kann auch ein wärmeisolierter Behälter, Sack oder dergleichen (nicht gezeigt) verwendet werden, um das Material nach dem Austreten aus dem Expander noch für eine gewisse Zeit, vorzugsweise ungefähr 10 Minuten auf einer Temperatur von über 80°C zu halten.

Es wurden verschiedene Versuche mit dem erfindungsgemäßen Verfahren durchgeführt. Dabei wurde der mechanische Energieeintrag in das Produkt im Expander in drei Stufen verändert. Entsprechend variierte die maximale Behandlungstemperatur im Expander in drei Stufen von 110°C, 120°C und 130°C. Bei anderen Versuchen wurde nur die Temperaturstufe 130°C im Expander verwendet. Es wurden sowohl Raps- als auch Soja-Extraktionsschrot sowohl für sich als auch in einer Mischung im Verhältnis 1:1 behandelt. Die Bypass-Protein-Analyse umfaßt dabei die Bestimmung der UDP₂-, UDP₅- und UDP₈-Werte. Der UPD-Wert gibt dabei an, welcher Anteil des Gesamtproteins im Pansen nicht abgebaut wird, wenn die Gesamtfuttermenge im Pansen eine Passagerate in den Darmtrakt - ausgedrückt in Prozent - aufweist, die durch den Index 2, 5 oder 8 angegeben ist. UDP₅ beispielsweise besagt, daß der Gehalt an pansenstabilem Protein sich auf eine Pansen-Passagerate des Gesamtfutters von 5 % pro Stunde bezieht. Hier geht man davon aus, daß das Tier stündlich 5 % des Panseninhalts an den Dünndarm weitergibt. Bei Hochleistungstieren, die weitaus mehr Futter als leistungsschwache Tiere benötigen und aufnehmen, ist die Passagerate (trotz eines für gewöhnlich größer entwickelten Pansens) deutlich höher - d. h., daß z. B. 8 % des Panseninhalts stündlich in den Dünndarm fließen (UDP-Wert daher = UDP₈).

Das insgesamt nutzbare Protein, d.h. Bypass-Protein plus im Pansen erzeugtes mikrobielles Protein wird als nutzbares Rohprotein (nXP), wieder mit dem Index als Bezugsangabe für die Pansen-Passagerate des Gesamtfutters, in Gramm pro kg Trockenmasse angegeben.

"PDI" steht für "Protein Dispersibility Index" und bezeichnet den Anteil des wasserlöslichen Proteins am Gesamtprotein (in angloamerikanischen Ländern wird die Löslichkeit des Proteins in Kalilauge KOH zugrundegelegt). Ein verringerter PDI-Index läßt Rückschlüsse auf eine Verringerung der ruminalen Abbaubarkeit der Proteine zu. PDI-Messungen dienen unter anderem zur Untermauerung der Aussagen von UDP-Analysen (bei anderen Verfahren wie z. B. der Behandlung von Vollfettsoja ermöglicht die PDI-Bestimmung Rückschlüsse auf eventuelle Schädigung von Aminosäuren.

Das Rohmaterial wurde im Vorkonditionierer 3 auf einen Feuchtegehalt von ungefähr 18% bis 19% eingestellt.

Tabelle 1 gibt die Behandlungsparameter und Analysewerte für die Mischung von Soja- und Rapsextraktionsschrot wieder:
- Zeile 1 teilt die Behandlungen in die drei Behandlungsvarianten A, B und C sowie in die Kontrollvariante (= Rohware ohne Behandlung) ein.
- Zeile 2 zeigt die verschiedenen Temperaturstufen jeder dieser Behandlungsvarianten.
- Zeile 3 gibt die UDP₅-Werte, in Gramm pro Kilogramm Gesamtprotein, wieder.
- Zeile 4 zeigt die Menge des nutzbaren Gesamtproteins, in Gramm pro kg Trockenmasse, an.
- Zeile 5 enthält Angaben zur Proteinlöslichkeit in Wasser.

Die Analysen wurden durch das Institut für Tierernährung, Tierphysiologie u. Stoffwechsel der Christian-Albrechts-Universität, Kiel sowie durch die IFF Internationale Forschungsgemeinschaft Futtermittel, Braunschweig, vorgenommen.

Der UDP-Ausgangswert der unbehandelten Rohware lag mit 325 g pro kg Gesamtprotein bereits recht hoch. Die Proteinlöslichkeit (PDI) der Rohware im Wasser war mit 13,3% gering. Die Behandlungsvariante A betraf dabei eine Behandlung in der Anlage der Fig. 1, in der sich an den Vorkonditionierer 3 der Expander 6 anschloß und das dabei entstehende Expandat geprüft wurde.

Eine Expandierung mit moderatem mechanischem Energieeintrag, der zu einer maximalen Behandlungstemperatur von nur ca. 110°C führte, bewirkte eine geringe, aber deutliche Steigerung des UDP₅-Wertes auf 354 g/kg XP. Dies spiegelt sich sowohl im deutlichen Abfall der Proteinlöslichkeit auf 8,6%, als auch im Anstieg des Anteils nutzbaren Gesamtproteins am Dünndarm auf 274 g/kg (nXP) wider. Die Steigerung der Behandlungstemperatur auf max. 120°C durch höheren mechanischen Energieeintrag bewirkte einen beträchtlichen Anstieg des UDP₅-Wertes auf 429 g/kg; dies entspricht immerhin rund 25% mehr Bypass-Protein als in der unbehandelten Rohware. Entsprechend stieg die nXP₅-Rate ebenfalls deutlich auf 300 g/kg. Die Abnahme der Proteinlöslichkeit hingegen war gering.

**Tabelle 1**

| **Behandlung** | **Kont.** | | **A** | | **B** | **C** |
|---|---|---|---|---|---|---|
| **Temperaturstufe (°C)** | - | 110 | 120 | 130 | 130 | 130 |
| **UDP**_{**5**} **(g/kg XP)** | 325 | 354 | 429 | 427 | 463 | 539 |
| **nXP**_{**5**} **(g/kg dm)** | 265 | 274 | 300 | 298 | 315 | 336 |
| **PDIwater (%)** | 13,3 | 8,6 | 8,3 | 8,0 | 7,5 | 6,8 |

Eine weitere Steigerung der Behandlungstemperatur auf 130°C brachte zunächst keinerlei Veränderung. Alle Analysewerte entsprachen nahezu denen der 120°-Stufe. Wegen der Einzelheiten, wie solche Messungen vorgenommen werden, wird auch auf den Stand der Technik (EP 1 033 078 A1) verwiesen.

Bei der Behandlung B wurde, wie dies ebenfalls aus dem Stand der Technik bekannt ist, vor dem Expander noch eine vorherige Konditionierung von ungefähr 10 Minuten bei ungefähr 100°C vorgenommen. Man erkennt, daß dadurch eine Erhöhung der UDP- und nXP-Werte erzielt und eine Verringerung der Wasserlöslichkeit der Proteinfraktion erreicht wird.

Die Behandlung C zeigt nun die Ergebnisse der erfindungsgemäßen Behandlung, bei der das Rohmaterial nicht der Konditionierung von 10 Minuten vor dem Expander gemäß Behandlung B ausgesetzt wird, sondern die hydrothermische Behandlung während ungefähr 10 Minuten bei 100°C erst nach dem Expander stattfindet. Das erfindungsgemäße Verfahren zeigt dabei durch einfaches zeitliches Vertauschen der hydrothermischen Behandlung und der Behandlung im Expander eine beträchtliche Erhöhung des UDP₅-Wertes, des nXP₅-Wertes und eine Verringerung der Wasserlöslichkeit. Der UDP₅-Wert war bei der erfindungsgemäßen Behandlung "C" rund 60% höher als derjenige der unbehandelten Rohwarenmischung.

Während Tabelle 1 Meßwerte für eine Soja/Raps-Extraktionsmischung zeigt, zeigt Tabelle 2 Werte für Raps-Extraktionsschrot.

**Tabelle 2**

| **Behandlung** | **Kont.** | | **A** | | **B** | **C** |
|---|---|---|---|---|---|---|
| **Temperaturstufe (**°**C)** | - | 110 | 120 | 130 | 130 | 130 |
| **UDP**_{**5**} **(g/kg XP)** | 495 | | | 551 | 548 | 615 |

Tabelle 3 zeigt die Ergebnisse für Soja-Extraktionsschrot:

**Tabelle 3**

| **Behandlung** | **Kont.** | | **A** | | **B** | **C** |
|---|---|---|---|---|---|---|
| **Temperaturstufe (°C)** | - | 110 | 120 | 130 | 130 | 130 |
| **UDP**_{**5**} **(g/kg XP)** | 180 | | | 362 | 405 | 415 |

Der UDP-Ausgangswert des unbehandelten Rapsschrotes lag bei 495 g/kg XP erstaunlich hoch. Anzunehmen ist daher, daß bei der Extraktion mit sehr hohen Rösttemperaturen und/oder langer Röstdauer gearbeitet wurde. Die Expandierung in Behandlungsvariante A steigerte diesen hohen Ausgangswert auf 551 g/kg; in Behandlungsvariante B auf annähernd dasselbe Niveau und in der erfindungsgemäßen Variante C auf den Höchstwert von 615 g/kg. Somit ergibt sich hier ein sehr ähnliches Bild der Analysewerte wie bei der Behandlung der Raps- und SojaschrotMischung.

Der UDP-Ausgangswert des unbehandelten Sojaschrotes hingegen (Tab. 3) ist mit 180 g/kg XP sehr gering. Die Expandierung in Behandlungsvariante A steigerte den Wert auf 362 g/kg; der UDP-Wert wurde verdoppelt. In Variante B stieg der Wert auf 405 g/kg an. Anders als bei der Mischung oder bei Rapsschrot allein, erbrachte gegenüber der Variante A hier die Variation des Behandlungsverfahrens eine Steigerung. In Variante C stieg der Wert auf 415 g/kg an. Der UDP-Wert konnte hier also weit mehr als verdoppelt werden.

**Tabelle 4**

| **Behandlung** | **Kont.** | **A** | **B** | **C** |
|---|---|---|---|---|
| **Behandlungstemperatur** | - | 130°C | 130°C | 130°C |
| **UDP**_{**5**} **(g/kg XP)** | 389 | 440 | 587 | 453 |
| **UDP**_{**2**} **(g/kg XP)** | 195 | 226 | 354 | 229 |
| **UDP**_{**8**} **(g/kg XP)** | 492 | 549 | 688 | 566 |

Tabelle 4 zeigt Meßwerte, die mit Raps-Extraktionsschrot erzielt wurden. Die Behandlungen A und C entsprechen dabei den Behandlungen der Tabellen 1 bis 3, während bei der Behandlung D statt der Erwärmung und Warmhaltung im hydrothermischen Reaktor der Behandlung "C" eine 10-minütige Aufbewahrung des über 80°C warmen Expandats in wärmeisolierten Säcken erfolgte. Man sieht hier ebenfalls gegenüber dem Verfahren A des Standes der Technik eine gewisse Verbesserung. Die wesentliche Verbesserung erhält man aber durch das erfindungsgemäße Behandlungsverfahren C, bei dem nach dem Expander das Material während ungefähr 10 Minuten in einem hydrothermischen Reaktor auf eine Temperatur von 100°C erwärmt und auf dieser Temperatur gehalten wird. Man erhält so eine ganz beträchtliche Verbesserung gegenüber dem Verfahren des Standes der Technik.

Bedampfung nach Expandierung hebt die Temperatur des Frischexpandats von ca. 90°C auf 100°C an, wodurch sich die Produktfeuchte um ca. 0,7 Gew.-% erhöht. Der größte Teil dieser zusätzlichen Feuchte verdampft anschließend beim Kühlen des fertigen Produkts. Insbesondere bei Grobschülpigkeit ist aber zum Erreichen der Endfeuchte nach dem Kühlvorgang noch ein zusätzlicher Trocknungsvorgang erforderlich.

## Patentansprüche

1. Verfahren zum Behandeln von Einzelfuttermitteln, Gesamtfuttermischungen, Futter-Prämixen und Futtermittelkomponenten für Wiederkäuer, insbesondere Milchkühe und Mastrinder, bei dem das Rohmaterial bei erhöhter Temperatur angefeuchtet und anschließend in einem Expander behandelt wird, **dadurch gekennzeichnet, daß** das Material nach dem Austreten aus dem Expander für ca. 3 bis 20 Minuten auf einer Temperatur von mehr als ungefähr 80°C gehalten wird.

2. Verfahren nach Anspruch 1, **dadurch gekennzeichnet, daß** das Material ungefähr 10 Minuten auf der Temperatur von mehr als ungefähr 80°C gehalten wird.

3. Verfahren nach Anspruch 1 oder 2, **dadurch gekennzeichnet, daß** das Material nach dem Austreten aus dem Expander in einer wärmeisolierten Umschließung gehalten wird.

4. Verfahren nach einem der Ansprüche 1 bis 3, **dadurch gekennzeichnet, daß** das Material nach dem Austreten aus dem Expander in einem hydrothermischen Reaktor auf eine Temperatur von ca. 100°C erwärmt und auf dieser Temperatur gehalten wird.

5. Verfahren nach Anspruch 4, **dadurch gekennzeichnet, daß** dem hydrothermischen Reaktor Dampf zugeführt wird.

6. Verfahren nach Anspruch 4 oder 5, **dadurch gekennzeichnet, daß** der hydrothermische Reaktor beheizt wird.

7. Verfahren nach einem der Ansprüche 1 bis 6, **dadurch gekennzeichnet, daß** das Rohmaterial vor dem Eintreten in den Expander auf einen Feuchtegehalt von ungefähr 15% bis 25%, insbesondere ungefähr 18% bis ungefähr 19% eingestellt wird.

8. Verfahren nach einem der Ansprüche 1 bis 7, **dadurch gekennzeichnet, daß** das Material im Expander auf eine Temperatur von bis zu ca. 130°C erwärmt wird.

9. Verfahren nach einem der Ansprüche 1 bis 8, **dadurch gekennzeichnet, daß** das Material anschließend pelletiert wird.
